# EUROPÄISCHE PATENTSCHRIFT

(11) **EP 3 403 214 B1**
(45) Veröffentlichungstag und Bekanntmachung des Hinweises auf die Patenterteilung: **01.07.2020**
(21) Anmeldenummer: 17710849.5
(22) Anmeldetag: 07.03.2017
(51) Int. Cl.: G06F 21/60, G06F 21/62

(54) **VERFAHREN UND EINRICHTUNG ZUM BEREITSTELLEN EINER KRYPTOGRAPHISCHEN SICHERHEITSFUNKTION FÜR DEN BETRIEB EINES GERÄTS**
METHOD AND APPARATUS FOR PROVIDING A CRYPTOGRAPHIC SECURITY FUNCTION FOR THE OPERATION OF A DEVICE
PROCÉDÉ ET DISPOSITIF POUR FOURNIR UNE FONCTION DE SÉCURITÉ CRYPTOGRAPHIQUE POUR LE FONCTIONNEMENT D'UN APPAREIL

(30) Priorität: 22.03.2016 DE 102016204684
(43) Veröffentlichungstag der Anmeldung: 21.11.2018
(73) Patentinhaber: Siemens Mobility GmbH, 81739 München (DE)
(72) Erfinder: MERLI, Dominik, 86690 Mertingen (DE); FALK, Rainer, 85586 Poing (DE); PYKA, Stefan, 85570 Markt Schwaben (DE)
(86) Internationale Anmeldenummer: PCT/EP2017/055244
(87) Internationale Veröffentlichungsnummer: WO 2017/162424

(56) Entgegenhaltungen:
- EP-A1- 1 507 211
- EP-A2- 1 102 153
- WO-A2-03/021427
- US-A- 5 956 505
- US-A1- 2005 050 315

## Beschreibung

Die vorliegende Erfindung betrifft ein Verfahren und eine Einrichtung zum Bereitstellen einer kryptographischen Sicherheitsfunktion für den Betrieb eines Geräts sowie ein zugehöriges Computerprogramm(-produkt).

### Hintergrund der Erfindung

Geräte, beispielsweise eingebettete Systeme (engl. Embedded Systems), sind heutzutage in allen Industriezweigen zu finden. Der (kryptographische) Schutz dieser Geräte spielt eine zunehmend wichtigere Rolle, um einen sicheren Betrieb gewährleisten zu können. Durch kryptographische Funktionen können Ziele wie Integrität, Vertraulichkeit oder Authentizität dieser Plattformen erreicht werden. Dadurch werden absichtliche, zielgerichtete Angriffe abgewehrt.

Eine Möglichkeit, ein eingebettetes System abzusichern, ist die Integration eines hardwarebasierten Vertrauensankers. Dieser kann diverse Aufgaben erfüllen, beispielsweise kann eine Sicherheitsfunktion einer Sicherheitsanwendung zur Laufzeit kryptographische Schlüssel zur Verfügung stellen, Integritätsprüfwerte von Anwendungs- und Konfigurationsdaten erstellen und prüfen, Daten signieren, kryptographisch starke Zufallszahlen bereitstellen, und vieles mehr.

Die Bezeichnung "Anchor" (deutsch: Anker) rührt daher, dass Sicherheits- oder Vertrauensstellungskonzepte der Datenverarbeitungsanlagen den Trust Anchor (Vertrauensanker) als Basis nutzen und dabei vorausgesetzt wird bzw. werden muss, dass der Trust Anchor selbst sicher und unkompromittiert ist.

Ein möglicher Trust Anchor ist beispielsweise das durch ISO/IEC 11889 im Jahre 2009 spezifizierte Trusted Platform Module (TPM), das in jedem modernen PC vorhanden ist und von modernen Betriebssystemen für bestimmte kryptographische Operationen zwingend vorausgesetzt wird. Beispielsweise fußt die Festplattenverschlüsselung "BitLocker" des weitverbreiteten Betriebssystems "Windows" auf einem TPM. Ein Trust Anchor kann beispielsweise auch durch einen Crypto-Controller, durch ein sogenanntes Secure Element (deutsch: sicheres Element, z.B. ein Authentisierungs-Halbleiterbaustein) oder in Firmware realisiert sein.

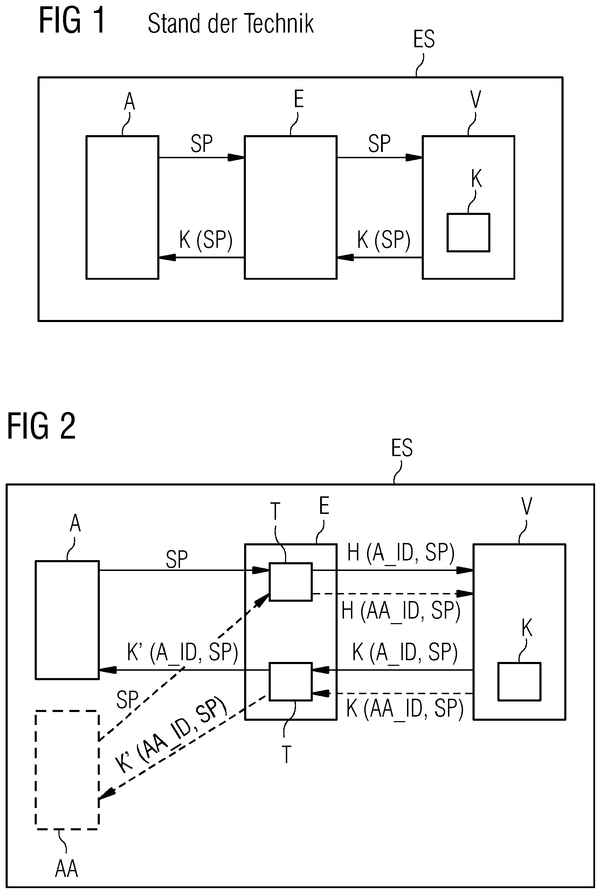

Gemäß Figur 1 ist folgendes Szenario mit einem Vertrauensanker vorstellbar. Ein eingebettetes System ES, z.B. ein Gerät oder ein Steuerrechner, umfasst zumindest eine Applikation A. Das System ES umfasst typischerweise auch ein nicht in der Figur dargestelltes Betriebssystem wie z.B. VxWorks, FreeRTOS, Linux oder Microsoft Windows. Ebenso in der Figur nicht dargestellt weist das Gerät in der Regel eine Steuereinheit CPU auf und stellt eine USB-Schnittstelle bereit, die mit einem extern zugänglichen USB-Port des Geräts verbunden ist. Auf einem angesteckten USB-Speichermodul (oder SD-Karte) können Konfigurationsdaten abgelegt sein, z.B. in verschlüsselter Form. Weiterhin kann das Gerät über Programmspeicher (Flash) und flüchtigen Speicher (RAM), eine Netzwerkschnittstelle (z.B. Ethernet) und eine Ein-Ausgabe-Einheit (I/O), an der Peripherie anschließbar ist (Sensoren, Aktoren), verfügen. Außerdem kann ein Secure Element als Vertrauensanker vorgesehen sein.

Sogenannte Apps bzw. Anwendungen (Applikation) können Anfragen an das Secure Element stellen, um von ihm kryptographische Funktionen berechnen zu lassen.
Dabei kann es sich beispielsweise um eine Steuerungsapplikation oder eine Diagnoseapplikation handeln. Diese kommuniziert über eine Einrichtung E oder über einen Treiber oder einem Kernelmodul mit einem Vertrauensanker V des Systems ES. Die Einrichtung E kommuniziert mit einem Vertrauensanker V. Eine Anwendung A baut z.B. eine kryptographisch geschützte Kommunikationsverbindung z.B. über ein drahtgebundenes und/oder drahtloses Kommunikationsnetzwerk z.B. WLAN, Ethernet etc. auf, oder sie möchte Konfigurationsdaten entschlüsseln. Um diese sichere Funktion auszuführen, fordert die Anwendung A eine kryptographische Sicherheitsfunktion z.B. einen Schlüssel, eine Schlüsselableitung bzw. eine Signaturberechnung an. An den Vertrauensanker wird optional ein von der Anwendung A vorgebbarer Security-Parameter SP, beispielsweise ein Schlüsselableitungsparameter oder ein Schlüsselidentifizierungsparameter übertragen. Die Einrichtung E erhält dann vom Vertrauensanker V eine kryptographische Sicherheitsfunktion K, z.B. in Form eines festen oder abhängig vom Security-Parameter SP abgeleiteten Schlüssels, der an die Anwendung zur Sicherung der Kommunikationsverbindung weitergereicht wird.

Hat eine Angreifer-Anwendung jedoch das Gerät bzw. die Einrichtung im Betrieb übernommen, kann sie dynamisch Anfragen an den Vertrauensanker stellen, der ihr dann beliebige kryptographische Operationen bzw. Sicherheitsfunktionen ausführt. Das kann die Sicherheit des Geräts deutlich beeinträchtigen.

Nach EP 1 102 153 A2 ist weiter ein Verfahren und System bekannt, mit dem dynamisch, zugeschnittene Implementierungen von Programmen konstruiert werden können, die bestimmten Beschränkungen unterliegen. Das System bestimmt, welche Beschränkungen diesen Dienst betreffen und konstruiert die Implementierung entsprechend. Somit ist die Implementierung speziell auf die entsprechende Anwendung zugeschnitten. Das Verfahren kann insbesondere zum Zusammensetzen unterschiedlicher Regeln oder Beschränkungen genutzt werden, wie zum Beispiel Exportregulierungen auf Ver- und Entschlüsselungsfunktionen.

In der EP 1 507 211 A1 wird ein Kommunikationsgerät beschrieben, welches Daten sicher verkapselt und diese mittels eines Programms als verkapseltes Objekt prozessiert. Damit kann ein beschränkter Zugriff auf Daten und damit Sicherheit für Anwender erreicht werden.

Ebenso wird in der WO 03/021427 A2 ein Verfahren und ein System beschrieben, das erlaubt den Zugriff auf verschiedene Funktionsebenen von Software zu kontrollieren. Damit kann eine einzige Software-Version entwickelt und herausgegeben werden, deren Funktion Kunden für zusätzliche Softwareentwicklung nutzen können.

Die Aufgabe der vorliegenden Erfindung ist es, ein Verfahren sowie ein Sicherheitsmodul bereitzustellen, die einen unberechtigten Zugriff auf den Vertrauensanker verhindern.

### Darstellung der Erfindung

Diese Aufgabe wird durch die unabhängigen Patentansprüche gelöst. Vorteilhafte Weiterbildungen sind Gegenstand der abhängigen Ansprüche.

Die Erfindung beansprucht ein Verfahren zum Bereitstellen einer kryptographischen Sicherheitsfunktion für den Betrieb eines Geräts, wobei folgende Verfahrensschritte ausgeführt werden:
- Empfangen einer Anforderung zum Bereitstellen einer solchen Sicherheitsfunktion,
- Bereitstellen einer Schnittstelle zu einer eine solche Sicherheitsfunktion zur Verfügung stellenden Stelle, genannt Vertrauensanker,
- wobei die genannte Schnittstelle eine Kontextinformation abhängig von der die Anforderung initiierende Anwendung ermittelt,
- Bereitstellen der angeforderten Sicherheitsfunktion für die die Anforderung initiierende Anwendung,
- wobei die ermittelte Kontextinformation in die Bereitstellung der genannten Sicherheitsfunktion einfließt.

Eine Weiterbildung der Erfindung sieht vor, dass die Kontextinformation als Parameter, z.B. als Security Parameter, in die Bereitstellung der Sicherheitsfunktion einfließt.

Die Sicherheitsfunktion kann in der Form bereitgestellt werden, dass sie ausgeführt wird. Die Ausführung kann einen Antwortwert liefern. Als Antwortwert ist ein (abgeleiteter) Schlüssel, eine Signatur und weitere kryptographische Funktionswerte denkbar.

Eine Weiterbildung der Erfindung sieht vor, dass die Kontextinformation als Einwegfunktionswert in die Bereitstellung der Sicherheitsfunktion einfließt.

Eine Weiterbildung der Erfindung sieht vor, dass die Kontextinformation den aus der Sicherheitsfunktion resultierenden Wert modifiziert und/oder beeinflusst. In diesem Fall wird der Sicherheitsfunktionswert nach der Ausführung der Sicherheitsfunktion entsprechend abgeändert.

Eine Weiterbildung der Erfindung sieht vor, dass die Schnittstelle die ermittelte Kontextinformation an den Vertrauensanker übergibt.

Eine Weiterbildung der Erfindung sieht vor, dass die Kontextinformation in einem gesicherten Format übergeben wird. Eine Weiterbildung der Erfindung sieht vor, dass das gesicherte Format durch Umwandlung mittels einer Einwegfunktion oder mittels einer Signatur oder mittels eines Authentifizierungscodes oder mittels Erzeugen oder Ableiten eines Schlüssels oder in beliebiger Kombination derselben erreicht wird.

Eine Weiterbildung der Erfindung sieht vor, dass die Kontextinformation die Identität der genannten Anwendung umfasst.

Die Kontextinformation kann dabei durch folgendes charakterisiert sein:
- Der Name der Anwendung
- Das Erstellungsdatum der Anwendung
- Hashwert über die ausführbare Datei
- Der Benutzername, der die Anwendung aufruft
- Die Benutzergruppe, die die Anwendung aufruft
- Die Prozess-ID des Prozesses, der die Anwendung aufruft
- Der Name-Space (Namensraum) des Prozesses bzw. des Nutzers, der die Anwendung aufruft. Innerhalb eines Namensraums können Objekt z.B. über Pfadnamen eindeutig angesprochen werden.
- Der Name bzw. Namensraum des Geräts, über das der ESK (embedded security kernel) angesprochen wird (z.B. in Linux: "/dev/esk"),
- Einen (Security Enhanced Linux-)Identifier bzw. betriebssystemspezifischen Identifizierer des zugreifenden Nutzers bzw. Prozesses bzw. des Geräts bzw. Systems (Rolle, Benutzername, Domäne, Typ, Kontext)
- Andere (betriebssystemspezifische) Daten über die Applikation oder den aktuellen Zustand

Ein weiterer Aspekt der Erfindung sieht eine Einrichtung zum Bereitstellen einer kryptographischen Sicherheitsfunktion für den Betrieb eines Geräts vor, aufweisend:
- Mittel zum Empfangen einer Anforderung zum Bereitstellen einer solchen Sicherheitsfunktion,
- zumindest eine Schnittstelle zu einer eine solche Sicherheitsfunktion zur Verfügung stellenden Stelle, genannt Vertrauensanker,
- wobei die genannte Schnittstelle dazu ausgelegt ist, eine Kontextinformation abhängig von der die Anforderung initiierende Anwendung zu ermitteln,
- Mittel zum Bereitstellen einer Sicherheitsfunktion für die die Anforderung initiierende Anwendung, wobei diese Mittel dazu ausgelegt sind, die ermittelte Kontextinformation in die Bereitstellung der genannten Sicherheitsfunktion einfließen zu lassen.

Ein weiterer Aspekt der Erfindung kann ein Computerprogramm bzw. ein Computerprogrammprodukt mit Mitteln zur Durchführung des Verfahrens und dessen genannte Ausgestaltungen sein, wenn das Computerprogramm(produkt) auf einer Einrichtung der oben genannten Art zur Ausführung gebracht wird.

Obige Einrichtung und gegebenenfalls das Computerprogramm(produkt) können analog wie das Verfahren und dessen Ausgestaltungen bzw. Weiterbildungen entsprechend aus- bzw. weitergebildet werden.

Darüber hinaus kann eine Bereitstellungsvorrichtung zum Speichern und/oder Bereitstellen des Computerprogrammprodukts vorgesehen sein. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in einem System eingelesen und führt die Programmbefehle aus, sodass das erfindungsgemäße Verfahren auf einem Computer zur Ausführung gebracht wird oder das Erstellungsgerät derart konfiguriert wird, dass dieses die erfindungsgemäße Einrichtung erstellt.

Die Erfindung und ihre Ausführungsformen weist folgende Vorteile auf:
Der Vorteil dieser Erfindung liegt in der Abwehr von Angriffen, bei denen eine unberechtigte Angreifer-Anwendung Zugriff auf den Vertrauensanker erlangen will.
Wenn eine Angreifer-Anwendung nun ein System übernimmt, herausfindet, welche Identität ID, die auch Daten und Parameter der Original-Anwendung umfassen können, eine Original-Anwendung benutzt und dann beim Vertrauensanker dieselbe Sicherheitsoperation bzw. -funktion ausführen will, liefert der Vertrauensanker eine Sicherheitsfunktion zurück, die sich aus der ID der Original-Anwendung und den Angreifer-Anwendung spezifischen Kontextinformationen, z.B. der Prozessnummer oder Name, Datum, Hash, etc. der Angreifer-Anwendung zusammensetzt.

Weitere Vorteile, Einzelheiten und Weiterbildungen der Erfindung ergeben sich aus der nachfolgenden Beschreibung von Ausführungsbeispielen in Verbindung mit den Zeichnungen.

Dabei zeigen:
- Fig. 1: das eingangs beschriebene Vorgehen, und
- Fig. 2: das erfindungsgemäße Vorgehen, wenn zur Sicherheitsfunktion, Identitäts-/Kontext-Informationen bzgl. der aufrufenden Anwendung beispielsweise im Treiber des Vertrauensankers hinzugefügt wird.

Die Figur 2 zeigt ein eingebettetes System ES mit einer Einrichtung E zum Bereitstellen einer kryptographischen Sicherheitsfunktion. Das eingebettete System ES umfasst hierbei Anwendungen z.B. A, AA. Die Einrichtung E umfasst bzw. kommuniziert mit einer die Sicherheitsfunktion zur Verfügung stellenden Stelle vorstehend auch Vertrauensanker V genannt. Die Kommunikation des Vertrauensankers V mit der Einrichtung E erfolgt mittels einer Schnittstelle, die z.B. als Treiber T ausgebildet sein kann. Der Treiber (z.B. Linux-Kernel-Modul) des Vertrauensankers V lässt zumindest eine Kontextinformation über die die Sicherheitsfunktion anfordernde bzw. aufrufende Anwendung beispielsweise A in die vom Vertrauensanker auszuführende bzw. bereitzustellende Sicherheitsoperation mit einfließen. Eine Kontextinformation z.B. in Form einer Identitäts- bzw. Identifikations-Information A ID der aufrufenden Anwendung A wird in die Sicherheitsoperation mit einbezogen. Im Ausführungsbeispiel werden in der Figur 2 zwei Anwendungen A und AA gezeigt, die vom Vertrauensanker eine Sicherheitsfunktion K anfordern. Dabei initiiert eine Original-Anwendung A eine Anforderung einer Sicherheitsfunktion K. Eine Schnittstelle T der Einrichtung E ermittelt weiterhin als Kontextinformation beispielsweise eine Identifikationsinformation A_ID der Applikation A. Der Treiber übergibt in einer Variante die von der Original-Anwendung erhaltenden Daten und/oder Parameter, z.B. einen Security-Parameter SP zusammen mit einer abhängig von der aufrufenden Applikation ermittelten Identifikationsinformation A ID an den Vertrauensanker. In einer anderen Variante bildet die Schnittstelle beispielsweise mit einer Einweg- bzw. Hashfunktion H(A_ID, SP) einen Parameter bzw. einen Hashfunktionswert, der abhängig von einem von der Applikation vorgebbaren Parameter SP und der Identifikationsinformation A_ID der Anwendung ist, und übergibt diesen an den Vertrauensanker V. Der Vertrauensanker liefert mit der angeforderten Sicherheitsoperation eine Sicherheitsfunktion z.B. als Signaturfunktion, als Schlüsselfunktion oder als weitere kryptographische Funktion bzw. Operation zurück. In einer weiteren Variante kann der Treiber die vom Vertrauensanker empfangene Antwortnachricht, die ein Ergebnis der Sicherheitsfunktion K(SP) umfassen kann, abhängig von der ermittelten Identifikationsinformation der Applikation A modifizieren und den modifizierten Wert K' (A_ID, SP) der Applikation A bereitstellen. Im Falle der Angreifer-Anwendung würde der Anwendung AA bei identischem Aufruf der Einrichtung E ein unterschiedlicher Antwort-Wert K' (AA_ID, SP) von der Einrichtung bereitgestellt. Alle oben dargestellten Vorgehensweisen können auch miteinander kombiniert werden.

Mögliche solche Kontext-Informationen wären unter anderem (einzeln oder in Kombination):
- Der Name der Anwendung
- Das Erstellungsdatum der Anwendung
- Hashwert über die ausführbare Datei
- Der Benutzername, der die Anwendung aufruft
- Die Benutzergruppe, die die Anwendung aufruft
- Die Prozess-ID des Prozesses, der die Anwendung aufruft
- Der Name-Space (Namensraum) der Prozesses bzw. des Nutzers, der die Anwendung aufruft. Innerhalb eines Namensraums können Objekt z.B. über Pfadnamen eindeutig angesprochen werden.
- Der Name bzw. Namensraum des Geräts, über das der ESK (embedded security kernel) angesprochen wird (z.B. in Linux: "/dev/esk"),
- Einen (Security Enhanced Linux-)Identifier bzw. betriebssystemspezifischen Identifizierer des zugreifenden Nutzers bzw. Prozesses bzw. des Geräts bzw. Systems (Rolle, Benutzername, Domäne, Typ, Kontext)
- Andere (betriebssystemspezifische) Daten über die Applikation oder den aktuellen Zustand

Analog zur Original-Anwendung A kann eine Angreifer-Anwendung AA auf den Vertrauensanker V zugreifen. Selbst wenn der Angreifer-Anwendung AA die Identifikationsinformation A ID der Original-Anwendung Abekannt wäre, so geht hierbei eine zweite Identifikationsinformation AA ID der Angreifer-Anwendung AA in die Sicherheitsfunktion K des Vertrauensankers V ein. Die Angreifer-Anwendung AA kann sich somit nur Ergebnisse von Sicherheitsfunktionen zurückliefern lassen, in die die zweite Information der Angreiferanwendung AA eingegangen ist. Die Angreifer-Anwendung AA erhält dann einen Antwort-Wert K (AA_ID, SP) bzw. K'(AA_ID, SP) (z.B. ein abgeleiteter Schlüssel), der mit dem Antwort-Wert K(A_ID, SP) bzw. K'(A_ID, SP) (z.B. abgeleiteter Schlüssel) der Original-Anwendung A nicht zusammenpasst.

Um ein solches System erfolgreich anzugreifen, müsste die Angreifer-Anwendung AA Teile des Betriebssystems angreifen. Das ist kaum bzw. ggf. nur mit einem sehr hohen Aufwand möglich. Weiterhin ist es nicht erforderlich, den Zugriff auf eine Einrichtung bzw. eine Schnittstelle zu einem Vertrauensanker zu beschränken, was technisch oft nicht praktikabel umsetzbar ist und mit hohem Konfigurationsaufwand verbunden wäre. Es wird dabei zugelassen, dass eine Angreifer-Anwendung oder eine andere Anwendung auf den Vertrauensanker zugreift. Es wird aber erreicht, dass die Angreifer-Anwendung bzw. andere Anwendung nicht die gleiche Sicherheitsfunktion wie die erste Anwendung aufrufen kann.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Bereitstellen einer kryptographischen Sicherheitsfunktion für den Betrieb eines Geräts, wobei folgende Verfahrensschritte ausgeführt werden:
- Empfangen einer Anforderung zum Bereitstellen einer solchen Sicherheitsfunktion (K),
- Bereitstellen einer Schnittstelle (T) zu einer eine solche Sicherheitsfunktion zur Verfügung stellenden Stelle, genannt Vertrauensanker (V),
- wobei die genannte Schnittstelle eine Kontextinformation (A_ID, AA_ID) abhängig von der die Anforderung initiierende Anwendung (A, AA) ermittelt,
- Bereitstellen der angeforderten Sicherheitsfunktion für die die Anforderung initiierende Anwendung,
- wobei die ermittelte Kontextinformation in die Bereitstellung der genannten Sicherheitsfunktion einfließt, **dadurch gekennzeichnet, dass** die Kontextinformation die Identität der genannten Anwendung umfasst.

2. Verfahren nach dem vorhergehenden Anspruch, **dadurch gekennzeichnet, dass** die Kontextinformation als Parameter in die Bereitstellung der Sicherheitsfunktion einfließt.

3. Verfahren nach einem der vorhergehenden Ansprüche, **dadurch gekennzeichnet, dass** die Kontextinformation als Einwegfunktionswert in die Bereitstellung der Sicherheitsfunktion einfließt.

4. Verfahren nach einem der vorhergehenden Ansprüche, **dadurch gekennzeichnet, dass** die Kontextinformation den aus der Sicherheitsfunktion resultierenden Wert (K') modifiziert und/oder beeinflusst.

5. Verfahren nach einem der vorhergehenden Ansprüche, **dadurch gekennzeichnet, dass** die Schnittstelle die ermittelte Kontextinformation an den Vertrauensanker übergibt.

6. Verfahren nach einem der vorhergehenden Ansprüche, **dadurch gekennzeichnet, dass** die Kontextinformation in einem gesicherten Format übergeben wird.

7. Verfahren nach dem vorhergehenden Anspruch, **dadurch gekennzeichnet, dass** das gesicherte Format durch Umwandlung mittels einer Einwegfunktion oder mittels einer Signatur oder mittels eines Authentifizierungscodes oder mittels Erzeugen oder Ableiten eines Schlüssels erreicht wird.

8. Einrichtung (E) zum Bereitstellen einer kryptographischen Sicherheitsfunktion für den Betrieb eines Geräts, aufweisend:
- Mittel zum Empfangen einer Anforderung zum Bereitstellen einer solchen Sicherheitsfunktion (K),
- zumindest eine Schnittstelle (T) zu einer eine solche Sicherheitsfunktion zur Verfügung stellenden Stelle, genannt Vertrauensanker (V),
- wobei die genannte Schnittstelle dazu ausgelegt ist, eine Kontextinformation (A_ID, AA_ID) abhängig von der die Anforderung initiierende Anwendung (A, AA) zu ermitteln,
- Mittel zum Bereitstellen einer Sicherheitsfunktion (K) für die die Anforderung initiierende Anwendung, wobei diese Mittel dazu ausgelegt sind, die ermittelte Kontextinformation in die Bereitstellung der genannten Sicherheitsfunktion einfließen zu lassen, **dadurch gekennzeichnet, dass** die Kontextinformation die Identität der genannten Anwendung umfasst.

9. Einrichtung nach dem vorhergehenden Anspruch, **dadurch gekennzeichnet, dass** die Kontextinformation als Parameter in die Bereitstellung der Sicherheitsfunktion einfließt.

10. Einrichtung nach einem der vorhergehenden Einrichtungsansprüche, **dadurch gekennzeichnet, dass** die Kontextinformation als Einwegfunktionswert in die Bereitstellung der Sicherheitsfunktion einfließt.

11. Einrichtung nach einem der vorhergehenden Einrichtungsansprüche, **dadurch gekennzeichnet, dass** die Kontextinformation dazu ausgelegt ist, den aus der Sicherheitsfunktion resultierenden Wert (K') zu modifizieren und/oder zu beeinflussen.

12. Einrichtung nach einem der vorhergehenden Einrichtungsansprüche, **dadurch gekennzeichnet, dass** die Schnittstelle dazu ausgelegt ist, die ermittelte Kontextinformation an den Vertrauensanker zu übergeben.

13. Einrichtung nach einem der vorhergehenden Einrichtungsansprüche, **dadurch gekennzeichnet, dass** die Kontextinformation in einem gesicherten Format übergebbar ist.

14. Einrichtung nach dem vorhergehenden Anspruch, **dadurch gekennzeichnet, dass** das gesicherte Format durch Umwandlung mittels einer Einwegfunktion oder mittels einer Signatur oder mittels eines Authentifizierungscodes oder mittels Erzeugen oder Ableiten eines Schlüssels erreichbar ist.

15. Computerprogramm mit Mitteln zur Durchführung des Verfahrens nach einem der vorgenannten Verfahrensansprüche, wenn das Computerprogramm auf einer Einrichtung (E) nach einem der vorgenannten Einrichtungsansprüche zur Ausführung gebracht wird.

## Claims

1. Method for providing a cryptographic security function for the operation of an apparatus, wherein the following method steps are executed:
- receiving a request to provide such a security function (K),
- providing an interface (T) to an authority, called trust anchor (V), providing such a security function,
- wherein said interface determines context information (A_ID, AA_ID) depending on the application (A, AA) initiating the request,
- providing the requested security function for the application initiating the request,
- wherein the determined context information is incorporated into the provision of said security function, **characterized in that**
the context information comprises the identity of said application.

2. Method according to the preceding claim, **characterized in that** the context information is incorporated into the provision of the security function as a parameter.

3. Method according to either of the preceding claims, **characterized in that** the context information is incorporated into the provision of the security function as a one-way function value.

4. Method according to one of the preceding claims, **characterized in that** the context information modifies and/or influences the value (K') resulting from the security function.

5. Method according to one of the preceding claims, **characterized in that** the interface transmits the determined context information to the trust anchor.

6. Method according to one of the preceding claims, **characterized in that** the context information is transmitted in a secure format.

7. Method according to the preceding claim, **characterized in that** the secure format is created through a conversion by way of a one-way function or by way of a signature or by way of an authentication code or by way of generating or deriving a key.

8. Device (E) for providing a cryptographic security function for the operation of an apparatus, having:
- means for receiving a request to provide such a security function (K),
- at least one interface (T) to an authority, called trust anchor (V), providing such a security function,
- wherein said interface is designed to determine context information (A_ID, AA_ID) depending on the application (A, AA) initiating the request,
- means for providing a security function (K) for the application initiating the request, wherein these means are designed to incorporate the determined context information into the provision of said security function, **characterized in that**
the context information comprises the identity of said application.

9. Device according to the preceding claim, **characterized in that** the context information is incorporated into the provision of the security function as a parameter.

10. Device according to either of the preceding device claims, **characterized in that** the context information is incorporated into the provision of the security function as a one-way function value.

11. Device according to one of the preceding device claims, **characterized in that** the context information is designed to modify and/or to influence the value (K') resulting from the security function.

12. Device according to one of the preceding device claims, **characterized in that** the interface is designed to transmit the determined context information to the trust anchor.

13. Device according to one of the preceding device claims, **characterized in that** the context information is able to be transmitted in a secure format.

14. Device according to the preceding claim, **characterized in that** the secure format is able to be created through a conversion by way of a one-way function or by way of a signature or by way of an authentication code or by way of generating or deriving a key.

15. Computer program having means for performing the method according to one of the preceding method claims when the computer program is executed on a device (E) according to one of the preceding device claims.

## Revendications

1. Procédé pour fournir une fonction de sécurité cryptographique pour le fonctionnement d'un appareil, les étapes de procédé suivantes étant exécutées :
- réception d'une demande de fourniture d'une telle fonction de sécurité (K),
- fourniture d'une interface (T) vers un point, dit racine de confiance (V), mettant une telle fonction de sécurité à disposition,
- ladite interface déterminant une information de contexte (A_ID, AA_ID) en fonction de l'application (A, AA) qui initie la demande,
- fourniture de la fonction de sécurité demandée pour l'application qui initie la demande,
- l'information de contexte déterminée intervenant dans la fourniture de ladite fonction de sécurité, **caractérisé en ce que** l'information de contexte inclut l'identité de ladite application.

2. Procédé selon la revendication précédente, **caractérisé en ce que** l'information de contexte intervient en tant que paramètre dans la fourniture de la fonction de sécurité.

3. Procédé selon l'une des revendications précédentes, **caractérisé en ce que** l'information de contexte intervient en tant que valeur de fonction à sens unique dans la fourniture de la fonction de sécurité.

4. Procédé selon l'une des revendications précédentes, **caractérisé en ce que** l'information de contexte modifie et/ou influence la valeur (K') résultant de la fonction de sécurité.

5. Procédé selon l'une des revendications précédentes, **caractérisé en ce que** l'interface transfère l'information de contexte déterminée à la racine de confiance.

6. Procédé selon l'une des revendications précédentes, **caractérisé en ce que** l'information de contexte est transférée dans un format sécurisé.

7. Procédé selon la revendication précédente, **caractérisé en ce que** le format sécurisé est obtenu par conversion au moyen d'une fonction à sens unique ou au moyen d'une signature ou au moyen d'un code d'authentification ou au moyen de la génération ou de la dérivation d'une clé.

8. Dispositif (E) pour fournir une fonction de sécurité cryptographique pour le fonctionnement d'un appareil, comportant :
- des moyens de réception d'une demande de fourniture d'une telle fonction de sécurité (K),
- au moins une interface (T) vers un point, dit racine de confiance (V), mettant une telle fonction de sécurité à disposition,
- ladite interface étant conçue pour déterminer une information de contexte (A_ID, AA_ID) en fonction de l'application (A, AA) qui initie la demande,
- des moyens de fourniture d'une fonction de sécurité (K) pour l'application qui initie la demande,
ces moyens étant conçus pour faire intervenir l'information de contexte déterminée dans la fourniture de ladite fonction de sécurité,
**caractérisé en ce que** l'information de contexte inclut l'identité de ladite application.

9. Dispositif selon la revendication précédente, **caractérisé en ce que** l'information de contexte intervient en tant que paramètre dans la fourniture de la fonction de sécurité.

10. Dispositif selon l'une des revendications précédentes relatives au dispositif, **caractérisé en ce que** l'information de contexte intervient en tant que valeur de fonction à sens unique dans la fourniture de la fonction de sécurité.

11. Dispositif selon l'une des revendications précédentes relatives au dispositif, **caractérisé en ce que** l'information de contexte est conçue pour modifier et/ou influencer la valeur (K') résultant de la fonction de sécurité.

12. Dispositif selon l'une des revendications précédentes relatives au dispositif, **caractérisé en ce que** l'interface est conçue pour transférer l'information de contexte déterminée à la racine de confiance.

13. Dispositif selon l'une des revendications précédentes relatives au dispositif, **caractérisé en ce que** l'information de contexte peut être transférée dans un format sécurisé.

14. Dispositif selon la revendication précédente, **caractérisé en ce que** le format sécurisé peut être obtenu par conversion au moyen d'une fonction à sens unique ou au moyen d'une signature ou au moyen d'un code d'authentification ou au moyen de la génération ou de la dérivation d'une clé.

15. Programme informatique comportant des moyens pour exécuter le procédé selon l'une des revendications précédentes relatives au procédé lorsque le programme informatique est exécuté sur un dispositif (E) selon l'une des revendications précédentes relatives au dispositif.
